# EUROPÄISCHE PATENTSCHRIFT

(11) **EP 1 851 144 B1**
(45) Veröffentlichungstag und Bekanntmachung des Hinweises auf die Patenterteilung: **23.06.2010**
(21) Anmeldenummer: 06707098.7
(22) Anmeldetag: 21.02.2006
(51) Int. Cl.: B65G 47/244, B65G 47/82

(54) **DREHVORRICHTUNG**
ROTARY DEVICE
DISPOSITIF DE ROTATION

(30) Priorität: 25.02.2005 DE 202005003077 U
(43) Veröffentlichungstag der Anmeldung: 07.11.2007
(73) Patentinhaber: KRONES Aktiengesellschaft, 93073 Neutraubling (DE)
(72) Erfinder: PERL, Kurt, 83253 Rimsting (DE); HAAS, Johann, 83135 Schechen (Pfaffenhofen) (DE)
(86) Internationale Anmeldenummer: PCT/EP2006/001518
(87) Internationale Veröffentlichungsnummer: WO 2006/089702

(56) Entgegenhaltungen:
- EP-A- 1 086 912
- WO-A-2005/105626

## Beschreibung

Die Erfindung bezieht sich auf eine Drehvorrichtung für einen Gegenstand, insbesondere für ein Behältergebinde, wie sie beispielsweise in Förderstraßen von Abfüll- und Verpackungseinrichtungen für Getränke benötigt werden.

Derartige Drehvorrichtungen sind in den unterschiedlichsten Formen bekannt. Sie werden bevorzugt zum Ausrichten von beispielsweise im Wesentlichen rechteckigen Gegenständen mit einem von 1 abweichenden Seitenlängenverhältnis verwendet.

So zeigt beispielsweise die DE 102 19 129 B4 eine Vorrichtung zum Drehen und Verteilen oder Zusammenführen von Packs, die mit einem Greifkopf arbeitet. Der Greifkopf ist um eine vertikale Achse verdrehbar. Am Greifkopf sind zwei im Abstand zueinander angeordnete Leitschienen befestigt, die an ihren in Förderrichtung vorne liegenden Enden mit Anschlägen für die Packs versehen sind. Die Packs laufen zwischen den Leitschienen bis zum Anschlag an die Anschläge ein, worauf der Greifkopf um seine Vertikalachse gedreht wird, um die Packs in die neue Richtung auszurichten. Um die bekannte Drehvorrichtung jedoch an unterschiedliche Größe der Packs anpassen zu können, müssen die Leitschienen bewegbar und gegebenenfalls auch auswechselbar sowie für eine zusätzliche Montage von Zwischenunterteilungen oder dgl. ausgebildet sein. Eine solche Konstruktion ist sehr aufwendig. Darüber hinaus ist es mit der bekannten Drehvorrichtung nicht möglich, fehlerhaft ausgerichtete Packs immer zuverlässig einzufangen. Weiterhin muss die bekannte Drehvorrichtung nach dem Ausrichten der Packs in die neue Richtung wieder zurück in die ursprüngliche Ausrichtung gedreht werden, wodurch wertvolle Förderzeit verloren geht.

Die WO99/18020 zeigt eine Drehvorrichtung, bei der die zu drehenden Gegenstände entlang eines Förderwegs gefördert und von der Seite her Fingerelemente selektiv in den Förderweg der Gegenstände eingeschoben werden, die mit einer genau auf die Fördergeschwindigkeit abgestimmten Geschwindigkeit bewegt werden müssen. Auch hier müssen die seitlichen Fingerelemente beim Übergang auf einen anderen Gegenstand verstellt werden, und die Wirksamkeit der Drehvorrichtung hängt ebenfalls von einer korrekten Ausrichtung der Gegenstände beim Einlauf in die Drehvorrichtung ab. Auch muss die Drehvorrichtung nach dem Verdrehen eines Packs in ihre Ausgangsposition zurückgestellt werden, um den nächsten Pack aufzunehmen.

Aus EP 1 086 912 A ist eine Vorrichtung zum Verschieben von Gegenständen bekannt, die über eine Besatzfläche mit vertikal verschiebbaren Stiften verfügt. Ungünstigerweise verursacht die hohe Anzahl erforderlicher Stifte einen entsprechenden Bauaufwand.

Der vorliegenden Erfindung liegt somit die Aufgabe zugrunde, eine Drehvorrichtung bereitzustellen, die einfach aufgebaut, sowie schnell und zuverlässig in ihrer Funktion ist.

Die Aufgabe wird durch die im Anspruch 1 angegebenen Merkmale gelöst.

Durch die erfindungsgemäße Ausgestaltung wird eine Drehvorrichtung geschaffen, die bei konstruktiv einfachster Ausgestaltung universell einsetzbar ist. So muss beispielsweise der Gegenstand bei Verwendung der erfindungsgemäßen Drehvorrichtung nicht vorab auf eine bestimmte Position ausgerichtet werden, um überhaupt gedreht werden zu können. Vielmehr kann der Drehkopf der erfindungsgemäßen Drehvorrichtung den Gegenstand innerhalb eines vergleichsweise großen Bereichs ergreifen und verdrehen, da der erfindungsgemäße Drehkopf positionsneutral ausgestaltet ist; d.h. die Mitnahmevertiefung, durch die der Gegenstand beim Verdrehen des Drehkopfes mitgenommen wird, kann sich überall im Drehkopf bilden und ist nicht auf eine bestimmte Ausrichtung des Drehkopfes auf die Unterstützungsfläche beschränkt. Aus dem gleichen Grund muss der erfindungsgemäße Drehkopf nach dem Verdrehen nicht wieder in seine ursprüngliche Position zurückgedreht werden, sondern kann unmittelbar nach dem Freigeben eines ersten Gegenstandes, noch in der Verdrehposition für den ersten Gegenstand, auf einen zweiten Gegenstand abgesenkt werden und den zweiten Gegenstand in gleicher Weise verdrehen.

Vorteilhafte Weiterbildungen der Erfindung sind den Unteransprüchen zu entnehmen.

In Verbindung mit dem positionsneutralen Drehkopf wird zweckmäßigerweise auch eine positionsneutrale Unterstützungsfläche, d.h. eine Unterstützungsfläche verwendet, die die Gegenstände aufnehmen kann, ohne dass sie sich in einer bestimmten Position befinden. Eine besonders bevorzugte, positionsneutrale Unterstützungsfläche ist eine ebene Fläche, wie sie beispielsweise durch die Oberseite von Band- oder ähnlichen Förderern (z.B. Mattenkette mit geschlossener Oberfläche) bereitgestellt wird.

Die Anordnung der Einzelelemente erfolgt bevorzugt verteilt über eine Besatzfläche am Drehkopf, wobei die Besatzfläche durch freie Enden der Einzelelemente gebildet wird.

Ist die Besatzfläche größer als der Gegenstand, so kann sich eine den Gegenstand mitnehmend umschließende Mitnahmevertiefung auch dann ausbilden, wenn der Gegenstand stark außermittig zur Besatzfläche steht. Es soll jedoch darauf hingewiesen werden, dass der Drehkopf ggf. auch mit einer unvollständigen Mitnahmevertiefung funktioniert, solange Einzelelemente in Drehrichtung hinten am Gegenstand angreifen.

Vorteilhafterweise müssen bei einem Drehkopf der genannten Bauart die zu drehenden Gegenstände nicht absolut exakt in einer bestimmten Ausrichtlage (Quer- oder Längsausrichtung) bezüglich der Transportrichtung zugeführt werden, weil ein eventuelle Winkelabweichungen kompensierender selbstheilender Effekt auftritt, wenn die Einzelelemente beim Absenken auf einen Gegenstand dessen Außenkontur zunächst nicht oder nicht vollständig umgeben, aber mit einsetzender Drehung des Drehkopfes relativ zum Gegenstand schließlich in die erforderliche Arbeitsposition gelangen.

Die Ausgestaltung der Einzelelemente als Lamellen, d.h. langgestreckte Platten oder Leisten mit einem im Wesentlichen rechteckigen Querschnitt, führt zu einem robusten, funktionssicheren und trotzdem gut an die Gegenstände anpassbaren Drehkopf.

Werden die Lamellen gleich groß ausgebildet, so wird die Konstruktion weiter vereinfacht.

Noch weiter vereinfacht wird die Konstruktion, wenn sich Einzelelemente in Form von Lamellen vollständig über eine der Abmessungen der Besatzfläche erstrecken.

Da der Teilungsabstand zwischen den Einzelelementen, d.h. die Summe aus der Breite eines Einzelelements und dem Abstand zum nächsten Einzelelement in ein und derselben Richtung, die Empfindlichkeit des Drehkopfs in der Anpassung an unterschiedliche Abmessungen der Gegenstände bestimmt, sollte der Teilungsabstand auf die Art und Größe der zu drehenden Gegenstände abgestimmt sein, so dass die sich durch Verdrängung der Einzelelemente ausbildende Mitnahmevertiefung nicht oder nur unwesentlich größer ist als die Größe des Gegenstands. Dadurch wird die Einhaltung exakt des gleichen, vorbestimmten Winkelbetrags der Drehung für aufeinanderfolgende Gegenstände erleichtert. Es wurde festgestellt, dass Teilungsabstände von weniger als 15 mm, bevorzugt weniger als 10 mm, diesen Anforderungen genügen und trotzdem eine ausreichende Materialstärke der Einzelelemente gestatten, damit sie den Festigkeitsanforderungen im Betrieb entsprechen.

Da der Drehkopf von oben auf die Gegenstände abgesenkt wird, können die Einzelelemente in konstruktiv einfacher Weise allein durch Schwerkraftbelastung aus ihrer Verdrängstellung in die Ausgangsstellung zurückbewegt werden.

Die Führung der Einzelelemente in einer Gleitführung stellt einerseits sicher, dass die Einzelelemente nicht von ihrem vorgeschriebenen Weg abweichen, und stellt außerdem eine besonders kostengünstige, einfache Ausgestaltung für den Fall dar, dass die Einzelelemente nur unter Wirkung ihres eigenen Gewichts in die Ausgangsposition zurückfallen.

Es wäre denkbar, die Einzelelemente nicht nur als längliche Lamellen auszubilden, sondern diese noch in kürzere Abschnitte zu unterteilen, so dass im Extremfall stift- oder bolzenförmige Elemente vorliegen. Es versteht sich, dass die Führungen für die Einzelelemente an deren Form entsprechend angepasst gestaltet sein müssen.

Die Drehvorrichtung kann in Bezug auf die Transportrichtung der Gegenstände stationär über einem Förderer oder einer Platte angeordnet sein und der Drehkopf beispielsweise mittels einer gesteuert betätigbaren Hubeinrichtung, z.B. Pneumatikzylinder, von oben mit zu drehenden Gegenständen in Eingriff gebracht werden, wozu die Gegenstände ggf. vorübergehend gestoppt werden müssen. Zur Anpassung an verschiedene Höhenabmessungen der Gegenstände kann die Aufhängung der Drehvorrichtung höhenverstellbar ausgeführt sein. Um die Umstellung zu vereinfachen, kann hierfür ein Stellantrieb vorgesehen werden.

Zum Drehen des Drehkopfes wird bevorzugt eine elektromotorische Servoachse verwendet, die über eine programmierbare Steuerung betätigbar ist. Diese Steuerung steht mit Sensoren und/oder Kameras zur Erkennung der Orientierung der zulaufenden Gegenstände in Verbindung.

Höhere Leistungen sind erreichbar, wenn ein Drehkopf für die Dauer der Drehbewegung mit den Gegenständen zumindest kurzzeitig in Transportrichtung geschwindigkeitssynchron mitführbar ist, z.B. mit einer zur Transportrichtung parallelen Linear- bzw. Servoachse. Durch einen zur Transportrichtung entgegengesetzten Rückhub kann der Drehkopf dann für den nächstfolgenden Gegenstand wieder in Bereitschaft gebracht werden.

Bei verwendung eines Mehrachsmanipulators (Knickarmroboter etc.) besteht darüber hinaus die Möglichkeit, die Gegenstände nicht nur zu drehen, sondern auch quer zur Transportrichtung in verschiedene Spuren zu verschieben. Durch die Doppelfunktion Drehen und Verteilen ist ohne weiteres eine beliebige Lagenbildung im Zulaufbereich einer Palettiermaschine möglich.

Durch Verwendung mehrerer Drehvorrichtungen, insbesondere Mehrachsroboter, sind hohe Leistungen erzielbar. Bevorzugt werden die Drehvorrichtungen in Transportrichtung hintereinander angeordnet.

Zur Erreichung von Höchstleistungen können mehrere auf einer geschlossenen Umlaufbahn bewegbare Drehvorrichtungen wenigstens abschnittsweise kontinuierlich synchron zur Transportbahn der Gegenstände mitgeführt werden. Hierfür können mehrere Drehvorrichtungen beispielsweise an einem antreibbaren Zugmittel mit gleichmäßigem Teilungsabstand befestigt sein.

Ein Ausführungsbeispiel der Erfindung wird nachfolgend anhand der Zeichnungen näher erläutert. Es zeigen:
- Fig. 1: eine schematische Darstellung einer Fördereinrichtung mit einer erfindungsgemäße ausgebildeten Drehvorrichtung,
- Fig. 2: der Drehkopf aus Fig. 1 in Draufsicht,
- Fig. 3: der Drehkopf aus Fig. 1 in einer Darstellung von unten, und
- Fig. 4: eine schematische Darstellung der Wirkungsweise des Drehkopfs.

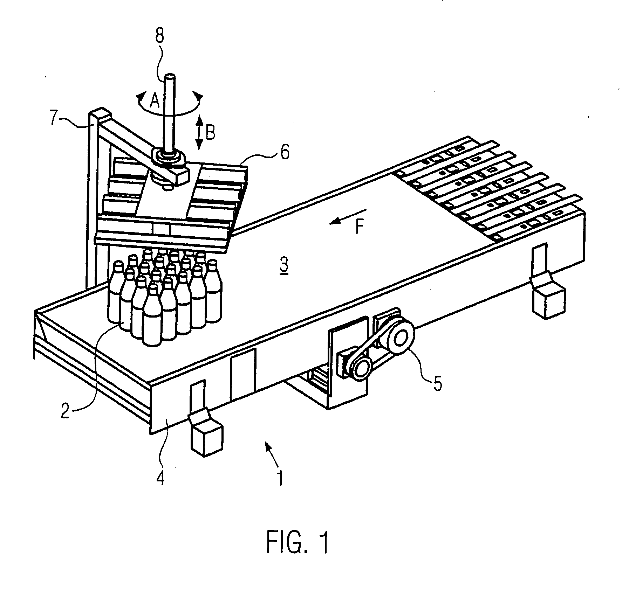

Fig. 1 zeigt in stark schematisierter, perspektivischer Darstellung eine erfindungsgemäße Drehvorrichtung 1 zum Verdrehen eines Gegenstands 2. Der Gegenstand 2 ist im dargestellten Ausführungsbeispiel ein Behältergebinde, genauer gesagt ein in eine Folie 2a eingeschweißtes Pack von Getränkebehältern 2b, insbesondere Flaschen. Die erfindungsgemäße Drehvorrichtung 1 ist jedoch auch für Behältergebinde in Form von Kartons oder für andere Gegenstände einsetzbar, bevorzugt jedoch für solche, die in Draufsicht einen nicht-rotationssymmetrischen Querschnitt aufweisen.

Die Gegenstände 2 stehen auf einer Unterstützungsfläche 3. Die Unterstützungsfläche 3 ist bevorzugt positionsneutral, d.h. die Gegenstände 2 können sich in eine Vielzahl von Positionen auf der Unterstützungsfläche 3 befinden, die Unterstützungsfläche 3 erfordert keine definierte Position der Gegenstände 2. Die Unterstützungsfläche 3 ist bevorzugt eben und bevorzugt größer als die Gegenstände 2. Im dargestellten Ausführungsbeispiel ist die Unterstützungsfläche 3 als Oberfläche eines Bandförderers 4 oder dgl. ausgebildet, der über einen Antrieb 5 in Förderrichtung F angetrieben wird, um die Gegenstände 2 in einen Bereich unterhalb eines Drehkopfs 6 zu fördern.

Der Drehkopf 6 ist an einer Halterung 7 befestigt und um eine sich im Wesentlichen senkrecht zur Unterstützungsfläche 3 (Transportebene) erstreckende Welle (Achse) 8 in Richtung des Pfeiles A verschwenkbar sowie in Richtung des Pfeiles B vertikal bezüglich der Unterstützungsfläche 3 verschiebbar. Bevorzugt ist der Drehkopf 6 in Richtung des Pfeiles A um 360° verschwenkbar und in Richtung des Pfeiles B so weit vertikal verschiebbar, dass er in seiner untersten Position einen Abstand zur Unterstützungsfläche 3 aufweist, der geringer ist als die Höhe des Gegenstandes 2, und in seiner obersten Position einen Abstand zur Unterstützungsfläche 3 aufweist, der größer ist als die Höhe des Gegenstands 2.

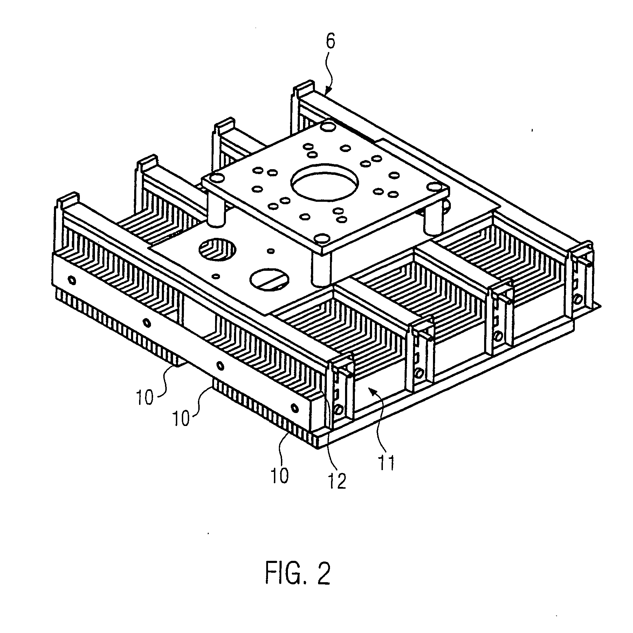

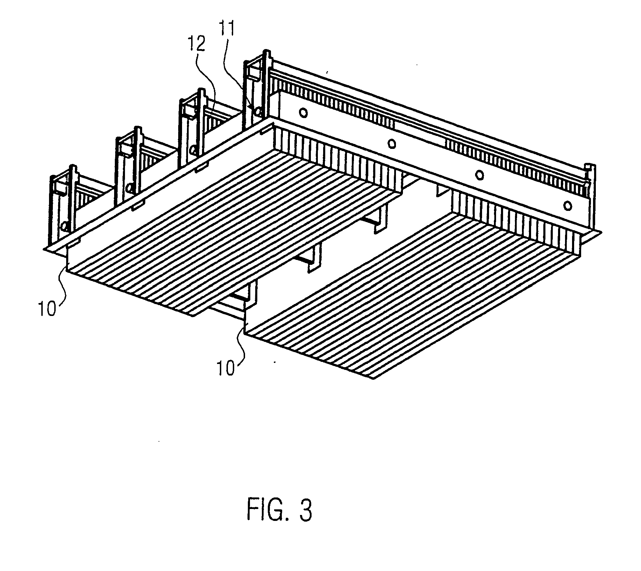

Wie auch in Verbindung mit den Fig. 2 bis 4 ersichtlich, ist der Drehkopf 6 in Form eines rechteckigen, bevorzugt quadratischen, Blockes ausgebildet und weist eine Unterseite auf, die im Wesentlichen parallel zur Unterstützungsfläche 3 ausgerichtet ist. Die Unterseite stellt eine Besatzfläche 9 dar, die durch freie Stirnflächen 10a einer Vielzahl von Einzelelementen 10 gebildet ist, die bewegbar in einem Rahmen 11 gelagert sind. Im dargestellten Ausführungsbeispiel enthält der Rahmen 11 Gleitführungen 12 für eine Verschiebebewegung der Einzelelemente 10 im Wesentlichen senkrecht zur Unterstützungsfläche 3. Die Gleitführungen 12 sind so ausgebildet, dass die Einzelelemente 10 unter Wirkung ihres Eigengewichts in eine Ausgangsposition fallen, in der ihre Stirnflächen 10a in der sich parallel zur Unterstützungsfläche 3 erstreckenden Besatzfläche 9 liegen. Die Ausgangsposition wird durch einen nicht gezeichneten Anschlag definiert.

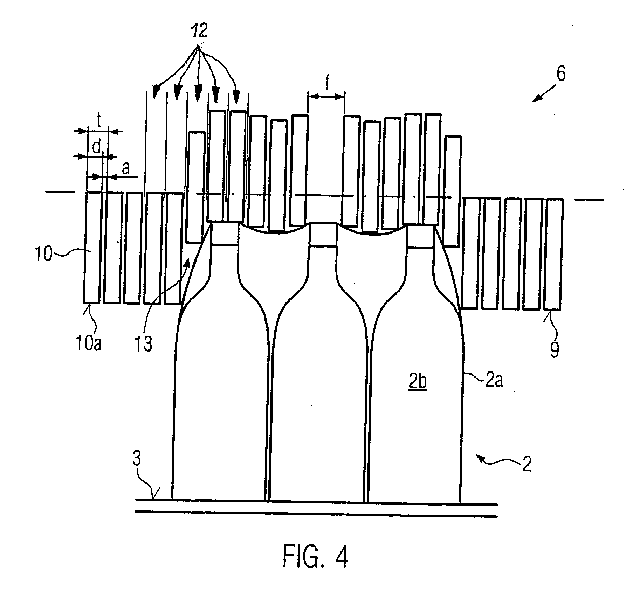

Wird jedoch der Drehkopf 6, wie insbesondere Fig. 4 zeigt, in Richtung des Pfeils B auf und über den Gegenstand abgesenkt, so werden die vom Gegenstand 2 berührten Einzelelemente 10 in ihrer Abwärtsbewegung gestoppt, d.h. im vorliegenden Ausführungsbeispiel entsteht eine senkrecht zur den Gleitführungen 12 gerichtete Relativbewegung, während alle übrigen Einzelelemente eine tieferliegende Position einnehmen, so dass sich eine Mitnahmevertiefung 13 bildet, die bereichsweise formschlüssig an den Gegenstand 2, im dargestellten Ausführungsbeispiel an die Form der Schrumpffolie 2a, die die Flaschen 2b einschließt, angepasst ist. Durch diese Mitnahmevertiefung 13 wird der Gegenstand 2 ausreichend gehalten, so dass er beim darauffolgenden Verdrehen des Drehkopfes 6 um einen vorbestimmten Winkelbereich, z.B. 90 Grad, in Richtung des Pfeiles A in dieser Drehung mitgenommen wird. Nach dem Beenden des Drehvorgangs wird der Drehkopf 6 in Richtung des Pfeiles B nach oben angehoben bis er den Gegenstand 2 freigibt. Dadurch bewegen sich die verdrängten Einzelelemente 10 wieder in ihre Ausgangsposition zurück und die Mitnahmevertiefung 13 verschwindet. Danach steht der Drehkopf 6 sofort wieder für einen neuen Drehvorgang zur Verfügung, d.h. der Drehkopf 6 muss nicht in seine ursprüngliche Ausgangsposition zurückgedreht werden, die er vor dem vorangegangenen Drehvorgang eingenommen hat.

Die Einzelelemente 10 weisen eine Dicke d und einen möglichst geringen Abstand a zueinander auf. Die Summe des Abstandes a und der Dicke d eines Einzelelements 10 bildet den Teilungsabstand t, der über die Empfindlichkeit und Anpassungsfähigkeit des Drehkopfes 6 entscheidet. Demzufolge sollte der Teilungsabstand t möglichst gering sein, so dass sich die Mitnahmevertiefung 13 eng an den äußeren Umfang des Gegenstandes 2 anpassen kann. Der Teilungsabstand t sollte deshalb bevorzugt weniger als 15 mm und insbesondere weniger als 10 mm betragen.

Wenn der Drehkopf 6 nur für Gegenstände 2 mit einer vorher bekannten Größe eingesetzt wird, die sich im Wesentlichen nicht oder nur unwesentlich ändert, so kann der Abstand zwischen zwei benachbarten Einzelelementen 10 in der Mitte des Drehkopfs 6 auf einen Freiraum f erhöht werden, was die erforderliche Anzahl der Einzelelemente 10 verringert und somit Herstellungskosten spart.

Die Besatzfläche 9 sollte größer als zumindest der obere Bereich des größten Gegenstandes sein und sollte so gewählt werden, dass auch bei einer möglichen Fehlausrichtung oder Falschpositionierung der Gegenstände 2 die Mitnahmevertiefung durch wenigstens zwei einander gegenüberliegende Einzelelemente begrenzt wird. Wie oben bereits angedeutet, ist es hingegen nicht notwendig, dass aufeinanderfolgend zu drehende Gegenstände jeweils gleich groß sind, in Draufsicht gesehen, und/oder jeweils in der gleichen Position und Ausrichtung auf der Unterstützungsfläche 3 angeordnet sind, d.h. es können Gegenstände unterschiedlicher Form und Ausrichtung ohne vorherige Anpassungsmaßnahmen unmittelbar erfasst und gedreht werden.

Im dargestellten Ausführungsbeispiel sind die Einzelelemente als Lamellen, d.h. streifen-, leisten- oder plattenförmige Elemente ausgebildet. Jedes Einzelelement 10 weist eine im Wesentlichen langgestreckt rechtwinklige Form auf, wobei die lange Seite sich über die gesamte Länge der Besatzfläche 9 erstreckt. Die Lamellen 10 sind hochkant und parallel zueinander angeordnet, wobei eine der längeren Schmalseiten die Stirnfläche 10a bildet.

Bei Verwendung von Lamellen als Einzelelemente 10 wird die Mitnahmevertiefung 13 als Kanal ausgebildet, der sich quer über die Länge des Drehkopfes 6 erstreckt, wobei nur die beiden, die Mitnahmevertiefung 13 seitlich begrenzenden Einzelelemente, unterstützt durch Einzelelemente, die gegebenenfalls in Vertiefungen in der Oberseite des Gegenstands 2 zu liegen kommen, als Mitnahme- bzw. Druckelemente wirken, die sich an den Gegenstand 2 beim Verdrehen des Drehkopfes 6 anlegen und somit ein Verdrehen des Gegenstandes 2 bewirken. Darüber hinaus wird durch das Gewicht der verdrängten Einzelelemente 10 auf die Oberseite des Gegenstands 2 eine leichte Druckkraft aufgebracht, die ein seitliches Ausweichen des Gegenstands 2 bei der Drehung verhindern hilft.

In Abwandlung des beschriebenen und gezeichneten Ausführungsbeispiels kann der Drehkopf mit anders konstruierten Einzelelementen ausgerüstet sein. So können beispielsweise die Lamellen in ihrer Länge ein- oder mehrfach geteilt sein, wobei jedes Teil unabhängig vom benachbarten Teil bewegbar ist. Die Einzelelemente müssen weiterhin nicht nur in parallelen Reihen sondern können beispielsweise auch versetzt zueinander oder regellos angeordnet sein. Die Einzelelemente können auch ohne Abstand eng nebeneinander angeordnet sein. Ist ein Abstand vorhanden, so muss dieser nicht unbedingt über die gesamte Besatzfläche gleich sein, sondern kann sich auch ändern, beispielsweise indem die Einzelelemente, die sich in der Mitte des Drehkopfs befinden, einen kleineren Abstand zur Anpassung an kleinere Gegenstände aufweisen als diejenigen Einzelelemente, die sich am Rand des Drehkopfes befinden. Die Einzelelemente können so geformt und angeordnet sein, dass die Mitnahmevertiefung einen allseitig geschlossenen Umfang zeigt.

Auch die Unterstützungsfläche muss nicht unbedingt die Fläche eines Förderers sein, sondern kann beispielsweise auch eine einfache, glatte Standfläche oder eine Unterlage sein, die ortfest oder ggf. zusammen mit dem Gegenstand verdreht wird. Der erfindungsgemäße Drehkopf ist auch dort von Vorteil, wo die Position der zu drehenden Gegenstände auf der Unterstützungsfläche exakt vorgegeben ist und/oder immer gleich große Gegenstände gedreht werden müssen, da es mit dem erfindungsgemäßen Drehkopf möglich ist, selbst Gegenstände, die nicht rotationssymmetrisch sind, in einer äußerst schnellen Taktfolge zu drehen, da der erfindungsgemäße Drehkopf nicht erst wieder in seine ursprüngliche Ausgangsposition gebracht werden muss, bevor er erneut einen Gegenstand drehen kann.

## Patentansprüche

1. Drehvorrichtung (1) für einen Gegenstand (2), insbesondere für ein Behältergebinde, mit einem verdrehbaren Drehkopf (6), der von oben auf den sich auf einer Unterstützungsfläche (3) befindenden Gegenstand (2) absenkbar ist und eine Vielzahl benachbart zueinander angeordneter, zwischen einer Ausgangs- und einer Verdrängstellung bewegbarer, als Lamellen ausgebildete Einzelelemente (10) aufweist, die beim Absenken des Drehkopfs (6) durch den Gegenstand (2) verdrängbar sind und im Drehkopf (6) eine Mitnahmevertiefung (13) bilden, durch die der Gegenstand (2) beim Verdrehen des Drehkopfes (6) mitnehmbar ist.

2. Drehvorrichtung nach Anspruch 1, **dadurch gekennzeichnet, dass** die Unterstützungsfläche (3) positionsneutral, insbesondere eben, ist.

3. Drehvorrichtung nach Anspruch 1 oder 2, **dadurch gekennzeichnet, dass** die Einzelelemente (10) am Drehkopf (6) über eine Besatzfläche (9) verteilt angeordnet sind.

4. Drehvorrichtung nach einem der Ansprüche 1 bis 3, **dadurch gekennzeichnet, dass** die Lamellen gleich groß sind.

5. Drehvorrichtung nach einem der Ansprüche 3 und 4, **dadurch gekennzeichnet, dass** die Einzelelemente (10) Lamellen sind und die Lamellen eine Länge aufweisen, die im Wesentlichen gleich der Länge der Besatzfläche (9) ist.

6. Drehvorrichtung nach einem der Ansprüche 1 bis 5, **dadurch gekennzeichnet, dass** die Einzelelemente (10) nebeneinanderliegend und mit einem Teilungsabstand (t) angeordnet sind, der weniger als 15 mm, bevorzugt weniger als 10 mm, beträgt.

7. Drehvorrichtung nach einem der Ansprüche 1 bis 6, **dadurch gekennzeichnet, dass** die Einzelelemente (10) durch Schwerkraftbelastung aus ihrer Verdrängstellung in ihre Ausgangsstellung bewegbar sind.

8. Drehvorrichtung nach einem der Ansprüche 1 bis 7, **dadurch gekennzeichnet, dass** jedes Einzelelement (10) in einer Gleitführung (12) gelagert ist.

## Claims

1. Rotator arrangement (1) for an article (2), and in particular for a pack of containers, having a rotatable rotator head (6) which can be lowered from above onto an article (2) situated on a supporting surface (3) and which has a plurality of individual components (10) in the form of lamellae which are arranged adjacent to one another, which can be moved between a starting position and a displaced position, and which, when the rotator head (6) is lowered, are able to be displaced by the article (2) and form an entraining depression (13) in the rotator head (6) by which the article (2) can be entrained when the rotator head (6) is rotated.

2. Rotator arrangement according to claim 1,
**characterised in that** the position of the supporting surface (3) is neutral, and in particular it is flat.

3. Rotator arrangement according to claim 1 or 2, **characterised in that** the individual components (10) are arranged in the rotator head (6) to be distributed over an occupiable area (9).

4. Rotator arrangement according to one of claims 1 to 3, **characterised in that** the lamellae are of the same size.

5. Rotator arrangement according to either of claims 3 and 4, **characterised in that** individual components (10) are lamellae and the lamellae are of a length which is substantially the same as the length of the occupiable area (9).

6. Rotator arrangement according to one of claims 1 to 5, **characterised in that** the individual components (10) are arranged next to one another and are arranged at a spacing (t) which is less than 15 mm and is preferably less than 10 mm.

7. Rotator arrangement according to one of claims 1 to 6, **characterised in that** the individual components (10) can be moved from their displaced position to their starting position by a loading generated by gravity.

8. Rotator arrangement according to one of claims 1 to 7, **characterised in that** each individual component (10) is mounted in a guide (12) for sliding.

## Revendications

1. Dispositif de rotation (1) pour un objet (2), notamment pour un groupe de récipients comportant une tête rotative (6) susceptible d'être entraînée en rotation, et de descendre sur un objet (2) se trouvant sur une surface d'appui (3) ainsi qu'un ensemble d'éléments séparés (10) voisins les uns des autres, installés entre une position de sortie et une position de compression, ces éléments étant réalisés sous la forme de lamelles qui, lors de la descente de la tête rotative (6), sont repoussées par l'objet (2) et forment dans la tête rotative (6), une cavité d'entraînement (13) permettant d'entraîner l'objet (2) lorsqu'on tourne la tête rotative (6).

2. Dispositif de rotation selon la revendication 1,
**caractérisé en ce que**
la surface d'appui (3) est neutre en position, notamment elle est plane.

3. Dispositif de rotation selon la revendication 1 ou 2,
**caractérisé en ce que**
les éléments séparés (10) sont disposés de manière répartie sur une surface d'occupation (9) de la tête rotative (6).

4. Dispositif de rotation selon l'une des revendications 1 à 3,
**caractérisé en ce que**
les lamelles sont de même dimension.

5. Dispositif de rotation selon l'une des revendications 3 et 4,
**caractérisé en ce que**
les éléments séparés (10) sont des lamelles et ces lamelles ont une longueur qui est principalement égale à la longueur de la surface d'occupation (9).

6. Dispositif de rotation selon l'une des revendications 1 à 5,
**caractérisé en ce que**
les éléments séparés (10) sont installés de manière juxtaposée avec un intervalle de division (t) inférieur à 15 mm et de préférence inférieur à 10 mm.

7. Dispositif de rotation selon l'une des revendications 1 à 6,
**caractérisé en ce que**
les éléments séparés (10) sont mobiles de leur position de refoulement à leur position de sortie sous l'effet de la force de gravité.

8. Dispositif de rotation selon l'une des revendications 1 à 7,
**caractérisé en ce que**
chaque élément séparé (10) est monté dans un guide de coulissement (12).
